Europäisches Patentamt

European Patent Office

Office européen des brevets

(11) Publication number: **0 133 474 B1**

# EUROPEAN PATENT SPECIFICATION

(45) Date of publication of patent specification: **11.12.91**

(51) Int. Cl.⁵: **G06F 1/00, H04B 10/00, H04L 25/493, G08C 23/00, G06F 3/02**

(21) Application number: **84107806.6**

(22) Date of filing: **05.07.84**

(54) **A data processing system including an infra-red coupled remote data entry device.**

(30) Priority: **10.08.83 US 522063**

(43) Date of publication of application:
**27.02.85 Bulletin 85/09**

(45) Publication of the grant of the patent:
**11.12.91 Bulletin 91/50**

(84) Designated Contracting States:
**AT BE CH DE FR GB IT LI NL SE**

(56) References cited:
**DE-A- 2 719 937**    **FR-A- 2 371 820**
**FR-A- 2 380 606**    **FR-A- 2 407 538**
**US-A- 2 464 667**    **US-A- 3 816 645**
**US-A- 4 313 227**    **US-A- 4 377 006**

**PATENT ABSTRACTS OF JAPAN, page 6467
E 77; & JP-A-52 72 502 ( MITSUBISHI DENKI
K.K.) 17-06-1977**

**IBM TECHNICAL DISCLOSURE BULLETIN, vol.
26, no. 2, July 1983, page 620, New York, US;
T.G. ARTHUR et al.: "Cordless keyboard"**

(73) Proprietor: **International Business Machines
Corporation
Old Orchard Road
Armonk, N.Y. 10504(US)**

(72) Inventor: **Beavers, John Andrew
278 N.E. 30th Street
Boca Raton Florida 33431(US)**

(74) Representative: **Blakemore, Frederick Norman
IBM United Kingdom Limited Intellectual
Property Department Hursley Park
Winchester Hampshire SO21 2JN(GB)**

## Description

The present invention relates to a data processing system including an infra-red coupled remote data entry device and tackles the problem of power conservation in cases where the remote data entry device is battery powered.

Infra-red communications links are used in many applications. Probably the most common is the remote control of television receivers. In such systems, pulse coded infra-red signals are generated in a hand-held, battery powered control unit. Different codes are generated in accordance with push-button inputs to control, for example, channel switching and volume level. Other applications of such hand-held devices include the control of various other domestic appliances and the remote control of mobile models.

In another group of infra-red transmission applications, a continuous pulse modulated beam is generated, and a sensor device determines when the beam is interrupted. These applications include intruder detection and article counting in, for example, manufacturing lines.

It should he noted that in the first of the above mentioned groups of applications, that is the television and domestic appliance controls, the number of transmissions per day is somewhat limited, and can be counted in tens. In the second group, the transmitter systems are normally energised from an a.c. line source. A problem occurs when a battery powered control unit is to be used for thousands of operations per day. This problem is, of course, battery life. Such a problem occurs when the transmitter system forms part of a keyboard entry device for a processor, whereby the coupling between the keyboard device and the processor is via an infra-red link. In such an arrangement, most keystrokes will generate a data set for transmission and at on average keystroke speed of, for example, fifty strokes per minute, three thousand characters are generated each hour. Comparing this with the television controller system usage, it is seen that the daily usage varies by a factor of greater than 1000:1. Thus, in the keyboard entry system, battery life is an important consideration, and any reduction in current consumption is highly significant.

IBM Technical Disclosure Bulletin Vol 26, No. 2, July 1983, p. 620, T.G. Arthur et al: "Cordless keyboard" shows a remote keyboard for a terminal workstation, the keyboard being provided with a transmitter and a self-contained power supply.

Patent Abstracts of Japan, p. 6467 E 77 and JP-A-5272502 describes a code transmitter wherein a pulse with a long duty cycle is encoded by sending short pulses at the rise portion of the pulse and one short pulse at the fall portion.

U.S. Patent No. 4313227 (Eder) shows a system in which data entry devices are coupled to a processor through infra-red links. In that system, the main keyboard is in the processor, and portable control units, each comprising a joystick device and a keypad, are coupled via infra-red links. No specific battery consumption minimising arrangement is shown for the control units. This is most probably because they are games input devices and, therefore, are not designed for the prolonged use expected from a full keyboard device.

Thus, it could be said that it is an object of the present invention to provide an infra-red data transmission system for coupling data from a battery powered keyboard entry device to a processor with reduced battery power consumption.

The present invention provides a data processing system according to claim 1.

In a preferred form of the invention the detecting and regenerating means comprises an amplifier and a single shot circuit responsive to the output of the amplifier and set to a period corresponding substantially to the pulse width of the coded data signals.

The present invention will be described further by way of example with reference to an embodiment thereof as illustrated in the accompanying drawings, in which:-

Figure 1 is a perspective diagram of a keyboard entry device coupled to a processor by an infra-red link;

Figure 2 is a block diagram of the key sensing and data transmission circuits in the keyboard entry device of Figure 1;

Figure 3 is a timing diagram showing the timing of signals generated in the system of Figure 1; and

Figure 4 is a diagram of the receiver circuit employed in the processor of Figure 1.

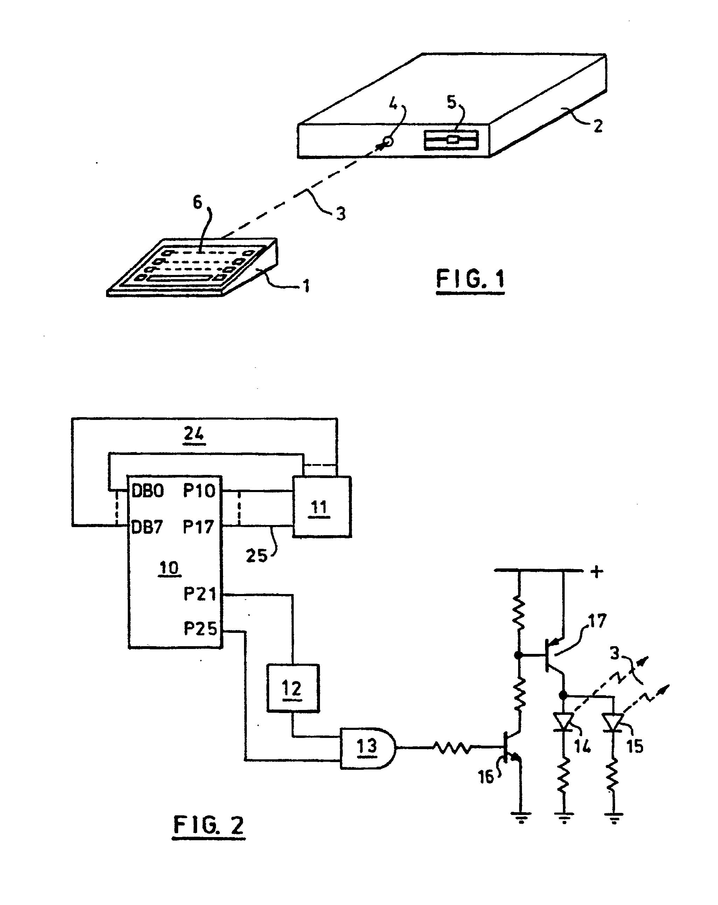

Referring to Figure 1, a processor unit 2 includes a diskette unit 5 and an infra-red detector positioned behind a window 4. A battery powered keyboard entry device 1 comprises a keyboard 6 and an infra-red generator comprising a light emitting diode (not shown). In response to the depression of the keys in keyboard 6, the keyboard entry device generates a modulated infra-red signal beam 3 for reception by the processor unit. The processor unit converts the received signals into a format suitable for its processing operations.

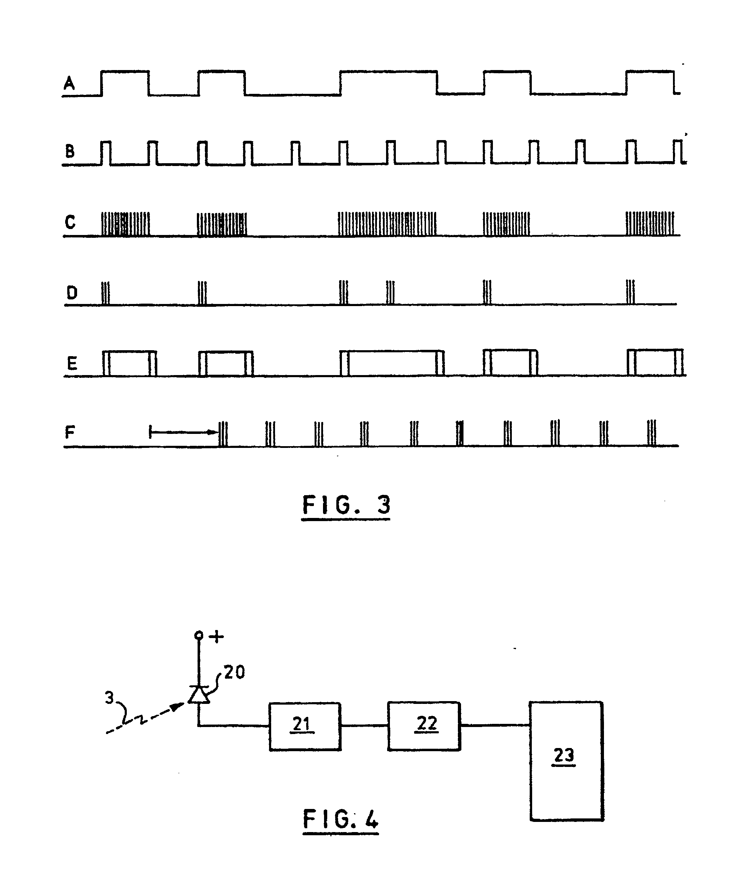

Figure 2 is a simplified diagram of the keyboard entry device circuitry. It comprises a microprocessor 10, for example the 80C48 processor produced by Intel Corporation, coupled to a matrix keyboard 11 by a bus 25 comprising eight drive lines. The keyboard is coupled back to the microprocessor 10 by a bus 24 comprising eight sense lines. As is well known, the matrix keyboard has eight row lines coupled to the input drive lines 25 and eight column lines coupled to the eight sense lines 24. Each key, when depressed, couples a column and a row line unique to that key. Thus when the drive lines are driven from port P10 through P17 of microprocessor 10 in sequence, selected sense lines are energised in accordance with which keys are depressed. Microprocessor 10 then converts the sense signals received by its data input bus DB0 through DB7 into digital code form for serial transmission. An example of transmission code can be seen at waveform A in Figure 3. This is an asynchronous bi-phase serial code in which a logically encoded '1' bit is represented as a '1' bit for the first half of a bit cell, and a logically encoded '0' is represented as a '1' bit in the second half of a bit cell. This data would normally be transmitted in an infra-red data transmission system by modulating the infra-red generator by pulses from output P25 of microprocessor 10 to provide an output as shown in waveform C in Figure 3. As indicated in waveform C, the infra-red generator is pulsed for half of each bit cell. In an exemplary system, with each bit cell having a period of 450 $\mu$ sec., there are fifteen generator pulses in each transmitted half bit cell, and each pulse is 7.5 $\mu$ secs. in length, assuming a 50% duty cycle.

It has now been realised that it is not necessary to transmit pulses for a full half period of each bit cell. By reducing the number of pulses, a considerable increase in the life of the keyboard entry device battery can be achieved, primarily because the infra-red generator is the main current consuming device. As an example, the average consumption of the electronics, apart from the LED drive, assuming that the microprocessor is in its standby mode, taking some 1.5 $\mu$ A, for much of the time and in its dynamic mode, taking some 6 m A, for keystroke routines, the battery drain is about 2 m A - hr. for an eight hour day.

Turning now to the LED drive, it is noted, in Figure 2, that two LED's 14 and 15 are employed in the keyboard entry device. It has been found desirable to employ two, rather than one, to ensure reliable communication between the keyboard entry device and the processor, especially when the two are in close proximity. An average drive current for a suitable LED is about 1A, so the required current for the present system is 2A. Taking the modulation system shown in waveform C of Figure 2, and described above, with a bit period of 450 $\mu$ sec., fifteen pulses in each half bit cell, each pulse is 7.5 $\mu$ sec in length, assuming a 50% duty cycle. With 12000 keystrokes per 8 hour day, each generating a ten bit make code and a ten bit break code, the codes comprising a start bit, eight data bits and a parity bit, the LED current drain is:

2 x 24000 x 7.5/$10^6$/3600 x 15 x 10 x 1000 = 15 mA - hr. per day.

With the modulation system shown in waveform D of Figure 2, there are only three pulses per bit rather than the fifteen of waveform C, this current drain is cut by 5, to give 3 mA - hr per eight hour day.

Thus, with the full bit modulation system of fifteen pulses, the total battery drain from the electronics and the LED drive is 15 mA - hr. per day, which, with a 600 mA - hr battery, should give an effective operating life of 35 days. With the three bit modulation system, the total drain becomes 5 mA - hr per day, which, with a 600 mA - hr. battery, should give at least a 120 day effective operating life.

Returning now to Figure 2, this shows an exemplary circuit for producing the three pulse per bit output. Microprocessor 10 is programmed to produce the waveform C (Figure 3) signals on an output part line P25 and clock signals as shown in waveform B of Figure 2 on an output part line P21. The clock signals are applied to a single shot circuit 12 which, in response to each, produces an output pulse of between 40 to 45 $\mu$ sec. These output pulses are applied to an AND gate 13 together with the outputs from port line P25 to provide the three pulse per bit signals shown at waveform D in Figure 3. These signals are applied to an LED drive circuit comprising transistors 16 and 17 and their associated resistors to drive the LED's 14 and 15. It should be noted that it may well be possible to program microprocessor 10 to produce the three pulse per bit signals directly to drive the LED drive circuit.

Figure 4 is a simplified block diagram of a suitable infra red receiver positioned in the processor 2 of Figure 1. It comprises a photo sensor diode positioned to receive the infra red pulses 3 from the keyboard entry device 6 of Figure 1. The received pulses produced output pulses from diode 20 which are amplified and shaped by an amplifier 21, the output of which is applied to a single-shot circuit 22. In response to the first of a group of the received pulses, this single-shot circuit provides an output pulse 225 $\mu$ sec. in length. Note that this first received pulse in a group may not necessarily correspond to the first pulse actually transmitted. This may be lost in the propagation between the keyboard and the processor, and therefore, the second or third of the three pulses of waveform D (Figure 3) may be the first received. Waveform E shows the output of single-shot circuit 22 and indicates that it corresponds to the code pattern of waveform A, but with its timing dependent on the first detected pulse of each group. For simplicity, the fixed delay due to the transmitter and receiver electronics and the variable propagation delay have not been indicated in the waveforms. The outputs of single-shot circuit 22 are applied to a microprocessor 23 for processing to produce data in the processor in a form suitable for further processing operations. In particular, microprocessor 23 is programmed to detect the lagging edge of the regenerated first pulse in a ton bit received group and, after a delay of about 230 $\mu$ sec, shown as an arrow on waveform F in Figure 3, produce a series of groups of sample pulses spaced apart by 225 $\mu$ sec. to sample the regenerated incoming data group (E) apart, of course, from the first bit, which, as has been mentioned above, is the start bit. To ensure reliable recovery of the data in the receiver each bit is subjected to this repeated sampling and its value to determined by majority vote of the samples. Three samples per bit have been shown, but five may be better.

Thus, what has been shown is a system linking a keyboard data entry device to a processor by an infra-red link. Each transmitted bit is represented by a series of infra red pulses which together are considerably shorter than a normal data bit representation in the entry device or the processor. The transmission system employed is an asynchronous binary coded system, in which each bit is represented as an output in either the first or the second half of a bit cell. In the example shown, each bit cell is represented by three pulses which occupy a period of one fifth of the period of a half bit cell and indicated the leading edge of a signal in this cell. At the receiver, the received pulse groups are stretched by a single-shot circuit to generate receiver signals which correspond to the original half bit cell pulses.

It is, of course, clear that, depending on the particular transmitting and receiving devices employed and the intended transmission path lengths, fewer or more infra-red pulses per bit may be used. However, in order to achieve reliable communication, at least two are desirable, and in order to maximise the conservation of battery power, the minimal number for reliable communication is desirable.

While the advantage of battery power conservation has been discussed above, other advantages accrue from the invention. As the average transmitter power is reduced, the LED drivers may be housed in one module rather than needing to be high power discrete devices. As there are fewer LED drive cycles per data pulse, the lifetime of these devices is considerably increased. Lastly, the receiver amplifier may be reduced in complexity and, therefore, cost. This is because with the system in which each transmitted pulse group occupies a full half bit cell, saturation delays when large signals are received tend to widen the data pulse contributing to sampling errors. Steps have, therefore, to be taken to design the amplifier to prevent such delays. With a system in accordance with the invention, it has been found that these saturation delays do not occur because of the lower power of the received signals, so this problem is reduced.

**Claims**

1. A data processing system including a processor (2,23) and a battery powered remote key entry device (1) for data entry, the key entry device (1) communicating with the processor (2,23) by means of an infra-red communications system, the processor (2,23) including means for detecting individual received infrared pulses, wherein:
the remote key entry device (1) includes a microprocessor (10);
and
each key stroke is translated, by the microprocessor (10), into a pulse coded data sequence (A), characterized in that

the leading edge only of each pulse of the pulse coded data sequence (A) is transmitted to the processor (2,23) by the remote key entry device, the leading edge being transmitted in the form of a burst of shorter infra-red pulses (D), the duration of the burst being appreciably less than half the duration of any pulse of the pulse coded sequence; and

the means (21,22) for detecting individual received infra-red pulses regenerates a corresponding data code pulse (E) for the first detected received infra-red pulse of each burst.

2. A data processing system as claimed in claim 1 wherein the detecting and regenerating means comprises an amplifier (21) and a single shot circuit (22) responsive to the output of the amplifier (21) and set to a period corresponding substantially to the pulse width of the coded data signals (A).

3. A data processing system as claimed in claim 1 or claim 2, in which the key entry device (1) is a keyboard data entry device and the pulse coded data sequence (A), for each keystroke, is a binary data stream comprising a start bit followed by a predetermined fixed number of data bits, the processor (2,23) being response to the lagging edge of each regenerated start bit to generate a series of sampling pulses to sample the subsequent regenerated data bits of the corresponding sequence.

4. A data processing system as claimed in any preceding claim, in which each the burst comprises two or more pulses extending for a period of one fifth or less than the period of a coded data pulse.

## Revendications

1. Système de traitement de données comportant un processeur (2, 23) et un dispositif d'entrée au clavier à distance alimenté par batterie ou pile (1) pour l'entrée de données, le dispositif d'entrée au clavier (1) communiquant avec le processeur (2, 23) au moyen d'un système de transmission à infrarouge, le processeur (2, 23) comportant un moyen pour détecter des impulsions individuelles reçues à infrarouge, dans lequel :
le dispositif d'entrée au clavier à distance (1) comporte un microprocesseur (10) ; et

chaque frappe de touche est transcodée, par le microprocesseur (10) en une suite de données codées par impulsions (A), caractérisé en ce que

le front avant seul de chaque impulsion de la suite de données codées par impulsions (A) est émis vers le processeur (2, 23) le front avant étant émis sous la forme d'une rafale d'impulsions plus courtes à infrarouge (D), la durée de la rafale étant appréciablement inférieure à la moitié de la durée de chaque impulsion de la suite codée par impulsions ; et en ce que

le moyen (21, 22) pour détecter les impulsions individuelles reçues à infrarouge régénère une impulsion correspondante de code de données (2) pour la première impulsion reçue détectée à infrarouge de chaque rafale.

2. Système de traitement de données selon la revendication 1, dans lequel le moyen de détection et de régénération comprend un amplificateur (21) et un circuit multivibrateur monostable (22) répondant à la sortie de l'amplificateur (21) et fixé à une période correspondant pratiquement à la largeur d'impulsion des signaux de données codés (A).

3. Système de traitement de données selon la revendication 1 ou 2, dans lequel le dispositif d'entrée par touches est un dispositif d'entrée de données au clavier et la suite de données codées par impulsions (A) pour chaque frappe de touche, est un train de données binaires contenant un bit de départ suivi par un nombre fixe prédéterminé de bits de donnée, le processeur (2, 23) étant sensible au retard du front de chaque bit régénéré de départ afin de produire une suite d'impulsions d'échantillonnage afin d'échantillonner les bits de donnée reproduits ultérieurs de la suite correspondante.

4. Système de traitement de données selon l'une quelconque des revendications précédentes, dans lequel chaque rafale comprend deux ou plusieurs impulsions se prolongeant pendant une période d'un quinzième ou moins de la période d'une impulsion de donnée codée.

## Patentansprüche

1. Datenverarbeitungssystem mit einem Prozessor (2, 23) und einer batteriegespeisten fernen Tasteneingabeeinrichtung (1) für Dateneingabe, wobei die Tasteneingabeeinrichtung (1) mit dem Prozessor (2, 23) mittels eines Infrarot-Kommunikationssystems kommuniziert und der Prozessor (2, 23) ein Mittel zum Erfassen einzelner empfangener Infrarotimpulse aufweist, bei welchem:

die ferne Tasteneingabeeinrichtung (1) einen Mikroprozessor (10) aufweist und

jeder Tastenanschlag von dem Mikroprozessor (10) in eine pulscodierte Datenfolge (A) übersetzt wird, dadurch gekennzeichnet, daß

nur die Anstiegsflanke jedes Impulses der pulscodierten Datenfolge (A) von der fernen Tasteneingabeeinrichtung zu dem Prozessor (2, 23) übertragen wird, wobei die Anstiegsflanke in Form eines Bündels kurzer Infrarotimpulse (D) übertragen wird, die Dauer des Bündels beträchtlich kleiner ist als die halbe Dauer irgendeines Impulses der pulscodierten Folge und

das Mittel (21, 22) zum Erfassen einzelner empfangener Infrarotimpulse einen entsprechenden Datencodeimpuls (E) für den ersten erfaßten empfangenen Infrarotimpuls jedes Bündels regeneriert.

2. Datenverarbeitungssystem nach Anspruch 1, bei welchem das Mittel zum Erfassen und Regenerieren einen Verstärker (21) und eine monostabile Schaltung (22) aufweist, die auf den Ausgang des Verstärkers (21) anspricht und auf eine Periode eingestellt ist, die im wesetlichen der Impulsbreite der codierten Datensignale (A) entspricht.

3.  Datenverarbeitungssystem nach Anspruch 1 oder 2, bei welchem die Tasteneingabeeinrichtung (1) eine Tastatur-Dateneingabeeinrichtung ist und die pulscodierte Datenfolge (A) für jeden Tastenanschlag ein binärer Datenstrom ist, der ein Startbit aufweist, das von einer vorher bestimmten festen Anzahl von Datenbits gefolgt ist, wobei der Prozessor (2, 23) auf die zurückbleibende Flanke jedes regenerierten Startbits antwortet, um eine Reihe von Abtastimpulsen zum Abtasten der nachfolgenden regenerierten Datenbits der entsprechenden Folge zu erzeugen.

4.  Datenverarbeitungssystem nach irgendeinem vorgehenden Anspruch, bei welchem jedes Bündel zwei oder mehrere Impulse aufweist, die sich über eine Periode von einem Fünftel oder kleiner als die Periode eines codierten Datenimpulses erstrecken.

FIG. 1

FIG. 2

A

B

C

D

E

F

## FIG. 3

## FIG. 4